# EUROPÄISCHE PATENTSCHRIFT

(11) **EP 0 145 643 B1**
(45) Veröffentlichungstag und Bekanntmachung des Hinweises auf die Patenterteilung: **06.10.1993**
(21) Anmeldenummer: 84730127.2
(22) Anmeldetag: 30.11.1984
(51) Int. Cl.: F16G 11/12

(54) **Vorrichtung zum Verbinden von Bauteilen sowie Spann- und/oder Kontrollvorrichtungen mit Gurten**
Device for fixing belts to connectors, tensioning and/or checking devices
Dispositif de liaison d'éléments d'assemblage, de dispositifs tendeurs et/ou de contrôle avec des sangles

(30) Priorität: 06.12.1983 DE 3344488; 06.12.1983 DE 3344489
(43) Veröffentlichungstag der Anmeldung: 19.06.1985
(73) Patentinhaber: RUD-Kettenfabrik Rieger & Dietz GmbH u. Co., D-73406 Aalen (DE)
(72) Erfinder: Smetz, Reinhard, Ing., D-8860 Baldingen (DE); Speich, Helmut, D-7081 Hüttlingen (DE)
(74) Vertreter: Böning, Manfred, Dr.-Ing.

(56) Entgegenhaltungen:
- FR-A- 2 407 097
- US-A- 3 120 403
- US-A- 3 826 473

## Beschreibung

Die Erfindung betrifft eine Vorrichtung nach dem Oberbegriff des Patentanspruches 1.

Eine Vorrichtung der in Betracht gezogenen Art ist aus der US-A-3 120 403 bekannt. Bei der bekannten Vorrichtung ist das Ende eines Gurtes unlösbar mit dem einen Einführschlitz aufweisenden Gurtanschluß verbunden, indem es durch den Einführschlitz geführt, um 180° umgelenkt und durch ein Anschlagpaar gegen Herausrutschen aus dem Führungsschlitz gesichert ist, wobei der eine Anschlag des Anschlagpaares von einem umgeklappten Teil des Gurtendes und der andere Anschlag von einer das umgelenkte Gurtende und einen gegen dieses anliegenden, vor dem Einführschlitz gelegenen Bereich des Gurtes eng umschließenden Hülse gebildet wird. Die bekannte Vorrichtung gestattet es, durch Drehen ihres Gurtanschlusses die wirksame Länge des mit ihr auf die geschilderte Art und Weise verbundenen Gurtes der Zähnezahl ihres Klinkenrades entsprechend stufenweise um vorgegebene Beträge zu verkürzen. Sie eignet sich dagegen nicht zum sogenannten Einschlaufen eines Gurtes, wie es beispielsweise zum Anschluß des Festendes eines Gurtes an Zurratschen praktiziert wird und wie es aus der FR-A-2 407 097 bekannt ist. In Fällen der zuletzt genannten Art weist das mit dem Gurt zu verbindende Bauteil zwei im Abstand voneinander angeordnete Querträger auf, um die das freie Gurtende dergestalt geschlungen werden muß, daß der Gurt im Stützbereich eines Querträgers doppelt liegt und ein äußerer Gurtabschnitt einen inneren, näher dem Gurtende gelegenen Gurtabschnitt festklemmt. Die Handhabung derartiger Gurtanschlüsse ist nicht nur mühsam, sondern sie setzt auch eine gewisse Übung und Erfahrung voraus, so daß ein richtiger und folglich allein sicherer Gurtanschluß nur bei Verwendung der jeweiligen Vorrichtung durch geschultes Personal gewährleistet ist.

Schließlich ist es noch bekannt - und zwar aus der bereits erwähnten US-A-3 120 403 -, einschlägige Vorrichtungen mit einem lösbaren Bolzen zu versehen und diesen zu Befestigungszwecken in eine am Ende eines Gurtes angeordnete, genähte Schlaufe einzuführen. Die Handhabung dieser Vorrichtungen ist ohne ein Schraubwerkzeug praktisch unmöglich.

Der Erfindung liegt die Aufgabe zugrunde, eine Vorrichtung der in Betracht gezogenen Gattung so auszubilden, daß ein Banteil sicher und schnell auch durch Nicht-Fachleute mit einem lösbaren Gurt verbunden werden kann. Diese Aufgabe wird erfindungsgemäß durch die Merkmale des Patentanspruches 1 gelöst.

Die erfindungsgemässe Vorrichtung bietet den Vorteil, daß ihr Benutzer das freie Gurtende lediglich in den Einführschlitz des Gurtanschlusses einführen muß, um diesen anschliessend um 360^{o} zu drehen.

Weitere Einzelheiten und Merkmale der erfindungsgemässen Vorrichtung ergeben sich aus den Unteransprüchen und der nachfolgenden Beschreibung der beigefügten Zeichnung. Es zeigen
Figur 1 die Seitenansicht einer Vorrichtung,
Figur 2 die Vorderansicht der Vorrichtung gemäß Figur 1,
Figur 3 die Seitenansicht einer Vorrichtung abgewandelter Bauart,
Figur 4 eine Einzelheit der Vorrichtung gemäß Figur 3 in einer ersten Stellung,
Figur 5 eine Einzelheit der Vorrichtung gemäß Figur 3 in einer zweiten Stellung,
Figur 6 eine Einzelheit der Vorrichtung gemäß Figur 3 in einer dritten Stellung,
Figur 7 die Seitenansicht einer weiteren als Gurtratsche ausgebildeten Vorrichtung,
Figur 8 die Draufsicht auf die Gurtratsche gemäß Figur 7,
Figur 9 den Einsatz der Gurtratsche gemäß Figur 8 in Verbindung mit einem durchgehenden Gurt in einer Stellung, in der der Gurt gegenüber beiden Gurtanschlüssen freibeweglich ist,
Figur 10 die Gurtratsche gemäß Figur 9 bei fixiertem zweiten Gurtanschluß und
Figur 11 die Gurtratsche gemäß Figuren 9 und 10 nach Betätigen des Antriebshebels für den ersten Gurtanschluß.

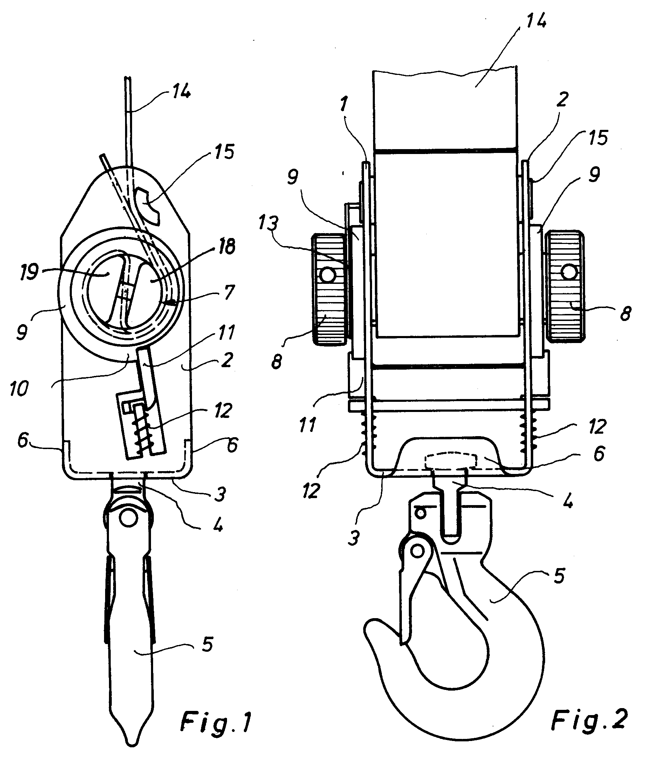

In den Figuren 1 und 2 sind 1 und 2 zwei über ein Joch 3 miteinander verbundene Seitenwände. Im Joch ist drehbar ein Wirbel 4 gelagert, der mit einem von einem Haken gebildeten Bauteil 5 verbunden ist. 6 sind Lappen zur Verstärkung des Joches. Die Seitenwände 1 und 2 sowie das Joch und die Lappen 6 werden von einem Stanzteil gebildet. In den Seitenwänden 1 und 2 ist drehbar ein Gurtanschluß 7 gelagert. An den Enden dieses Gurtanschlusses sind vorzugsweise gerändelte Betätigungsknöpfe 8 angeordnet, die ein schnelles Drehen des Gurtanschlusses 7 ermöglichen. Mit dem Gurtanschluß sind drehfest Klinkenräder 9 verbunden, die nur einen einzigen Zahn 10 aufweisen. Mit dem Zahn 10 wirkt eine Sperrklinke 11 zusammen, die durch Federn 12 in die in Figur 1 und Figur 2 gezeigte Position gedrückt wird. Eine Rückholfeder 13 sorgt dafür, daß der Zahn 10 auch bei Fehlen eines Gurtes 14 gegen die Sperrklinke 11 zur Anlage kommt. 15 ist ein Gurtführungssteg, der die Lage des abgehenden Gurtes definiert und die Gewähr für eine ausreichend große Umschlingung des Gurtanschlusses 7 durch den Gurt 14 bietet.

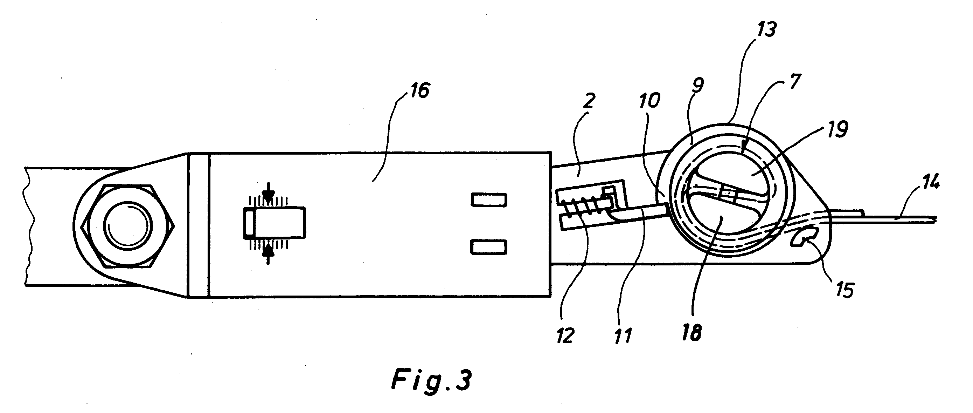

Während in den Figuren 1 und 2 eine Vorrichtung zum Verbinden eines Gurtes mit einem von einem Haken gebildeten Bauteil dargestellt ist, zeigt die Figur 3 eine Vorrichtung zum Verbinden eines Gurtes mit einer Kontrollvorrichtung 16 für die Gurtspannung. Der Aufbau der zweiten Vorrichtung entspricht voll und ganz dem Aufbau der zuerst beschriebenen Konstruktion. Für gleiche Teile wurden daher die gleichen Bezugszeichen verwendet.

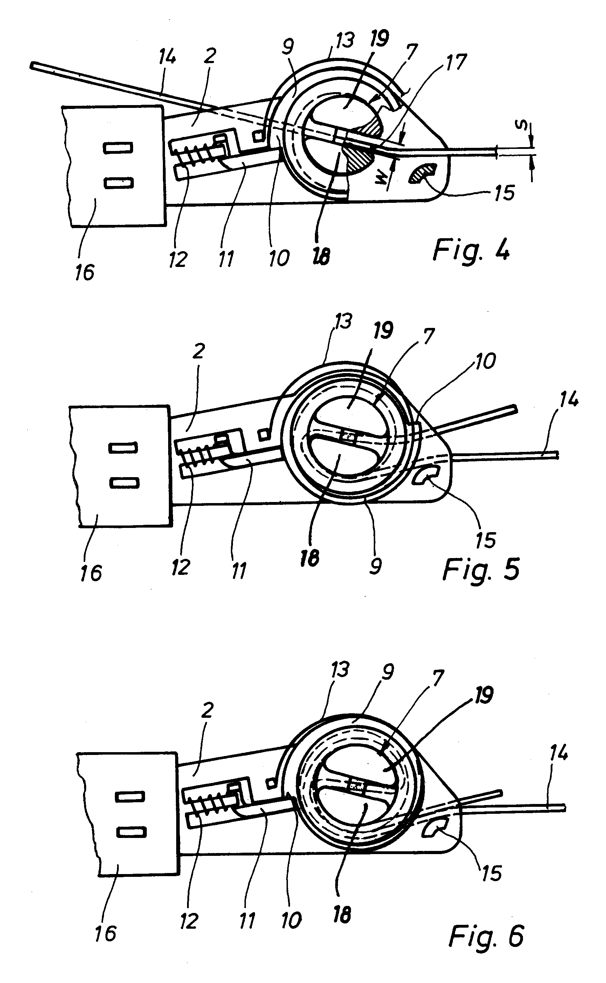

In den Figuren 4 - 6 ist das Einführen eines Gurtes 14 in eine Vorrichtung der beschriebenen Art dargestellt. Wie man dar Figur 4 entnehmen kann, wird das Gurtende in den Einführschlitz 17 des Gurtanschlusses eingeführt, der von zwei Querträgern 18 und 19 mit einem kreissegmentförmigen Profil gebildet wird, die an ihren beiden Enden durch die Klinkenräder 9 miteinander verbunden sind und zudem durch die Betätigungsknöpfe 8 zusammengehalten werden. Die Weite w des Einführschlitzes 17 ist im wesentlichen gleich der zweifachen Stärke s des anzuschliessenden Gurtes 14. Sobald der Gurt in die in Figur 4 dargestellte Lage überführt ist, dreht man den Gurtanschluß 7 um 360^{o} im Uhrzeigersinn. Fig. 5 zeigt eine Zwischenposition. Man erkennt deutlich, daß der Gurt automatisch auf den Gurtanschluß 7 aufgewickelt wird. In Figur 6 ist die Endlage gezeigt, in der der Zahn 10 nach einer Umdrehung von 360° erneut gegen die Sperrklinke 11 anliegt. Beim Lösen des Gurtes 14 braucht die Sperrklinke lediglich gegen die Kraft der Feder 12 aus dem Bereich des Zahnes 10 entfernt zu werden.

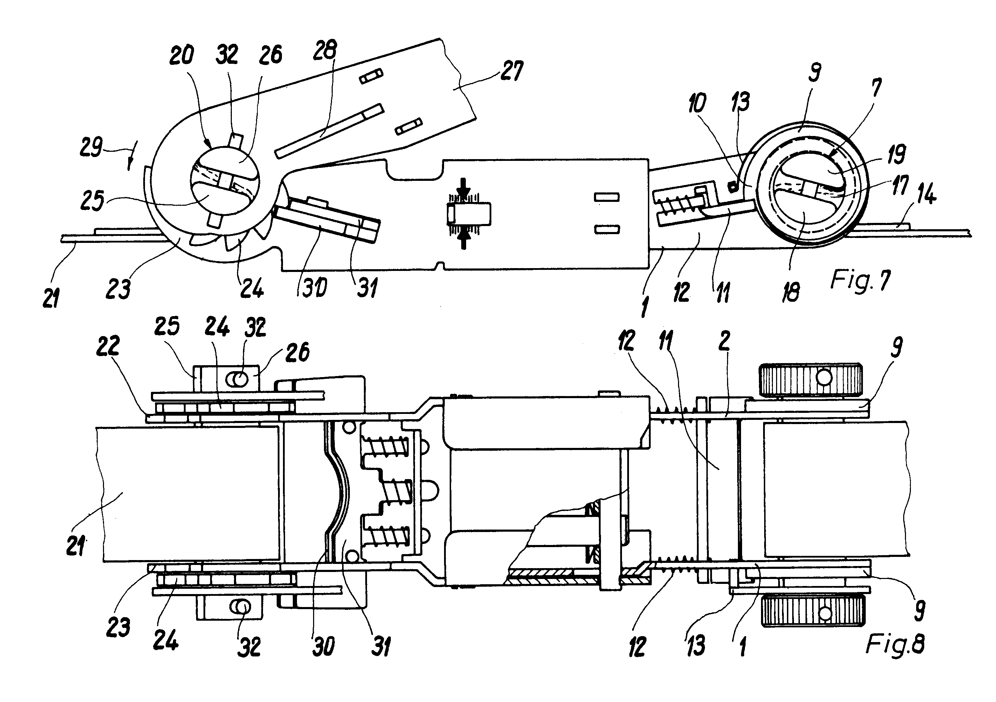

Die Figuren 7 und 8 zeigen eine als Gurtratsche ausgebildete Vorrichtung der in Betracht gezogenen Art, die zusätzlich zum Gurtanschluß 7 einen weiteren Gurtanschluß 20 aufweist, in den ein Gurt 21 eingeführt ist. Der weitere Gurtanschluß 20 ist zwischen Seitenwänden 22 und 23 gelagert, welche gegenüber den Seitenwänden 1 und 2 des ersten Gurtanschlusses 7 verschiebbar sind. Er ist mit Klinkenrädern 24 versehen, die eine Vielzahl von Zähnen aufweisen. Die Klinkenräder 24 sind drehfest mit Querträgern 25 und 26 des Gurtanschlusses 20 verbunden. Sie können mit Hilfe eines Antriebshebels 27, der eine federnde Antriebsklinke 28 aufweist, entgegen dem Uhrzeigersinn in Richtung des Pfeiles 29 gedreht werden. Dabei wickelt sich das Ende des Gurtes 21 mehr oder weniger stark auf den Querträgern 25 und 26 des Gurtanschlusses 20 auf. Federnde Sperrklinken 30 und 31 verhindern ein ungewolltes Zurückdrehen der Klinkenräder 24 unter Last.

32 sind die Querträger 25 und 26 miteinander verbindende Spannstifte.

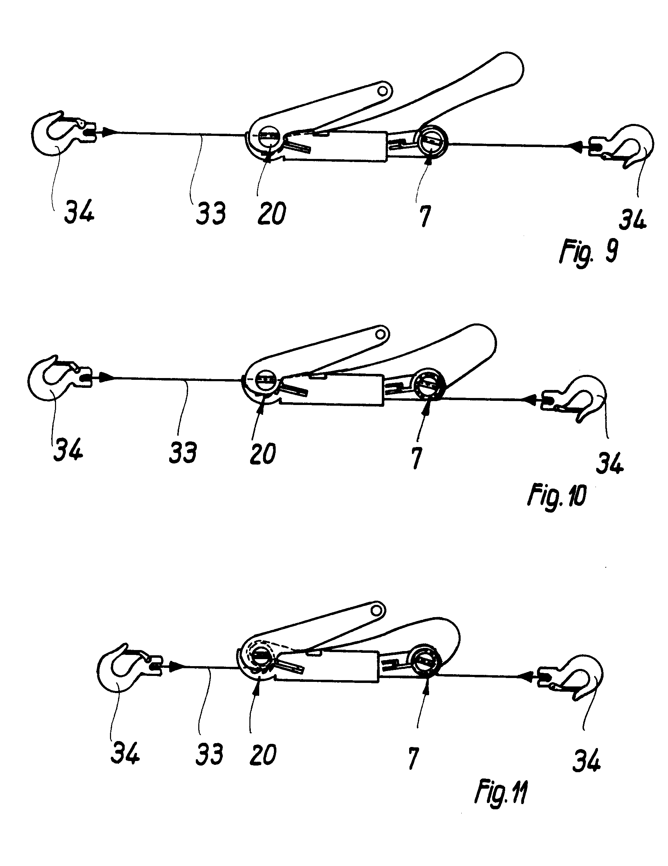

Die Figuren 9 und 10 zeigen den Einsatz einer Gurtratsche in Verbindung mit einem durchgehenden Gurt 33, an dessen Enden Haken 34 befestigt sind. Figur 9 zeigt die Lage der Gurtanschlüsse 7 und 20 in einer Position, in der der Gurt 33 frei durch die Einführschlitze beider Gurtanschlüsse hindurchbewegbar ist. In Figur 10 ist der Gurt 33 auf der Seite des Gurtanschlusses 7 bereits fixiert. In Figur 11 schließlich ist der Gurt 33 auch im Bereich des Gurtanschlusses 20 arretiert und der Gurt gespannt.

## Patentansprüche

1. Vorrichtung zum Verbinden von Bauteilen - wie Haken (5), Ösen, Schäkel, Kettenglieder od.dgl. - sowie von Spann- und/oder Kontrollvorrichtungen von Hebe- und/oder Verzurranordnungen mit Gurten (14,21), bei der zwischen sich gegenüberliegenden Seitenwänden (1,2) drehbar ein Gurtanschluß (7) gelagert ist, der mit einem Einführschlitz (17) für den Gurt (14) versehen und drehfest mit mindestens einem Klinkenrad (9) verbunden ist, dem eine federnd gelagerte Sperrklinke (11) zugeordnet ist, dadurch **gekennzeichnet,** daß das Klinkenrad (9) nur einen Zahn (10) aufweist.

2. Vorrichtung nach Anspruch 1, dadurch gekennzeichnet, daß der Gurtanschluß (7) mit einer Rückholfeder (13) zum Überführen des Klinkenrades (9) in dessen Raststellung versehen ist.

3. Vorrichtung nach einem der Ansprüche 1 oder 2, dadurch gekennzeichnet, daß der Gurtanschluß (7) den Einführschlitz (17) begrenzende Querträger aufweist.

4. Vorrichtung nach Anspruch 3, dadurch gekennzeichnet, daß die Querträger ein kreissegmentförmiges Profil haben.

5. Vorrichtung nach einem der Ansprüche 1 bis 4, dadurch gekennzeichnet, daß die Weite (w) des Einführschlitzes (17) des Gurtanschlusses (7) im wesentlichen gleich der zweifachen Stärke (s) des anzuschliessenden Gurtes (14) ist.

6. Vorrichtung nach einem der Ansprüche 1 bis 5, dadurch gekennzeichnet, daß parallel zum Gurtanschluß (7) und im Abstand von diesem mindestens ein die den Gurtanschluß (7) tragenden Seitenwände (1,2) miteinander verbindender Gurtführungssteg (15) angeordnet ist.

7. Vorrichtung nach Anspruch 6, dadurch gekennzeichnet, daß der Gurtführungssteg (15) mit einer runden Führungsfläche für den Gurt (14) versehen ist.

8. Vorrichtung nach einem der Ansprüche 1 bis 7, dadurch gekennzeichnet, daß die Seitenwände (1,2) durch ein Joch (3) miteinander verbunden sind.

9. Vorrichtung nach Anspruch 8, dadurch gekennzeichnet, daß das Joch (3) ein Lager für ein drehbares Bauteil (4) aufweist.

10. Vorrichtung nach einem der Ansprüche 1 bis 7, dadurch gekennzeichnet, daß sie als Gurtratsche mit zwei sich gegenüberliegenden Gurtanschlüssen (7,20) ausgebildet ist, wobei der weitere Gurtanschluß (20) in bekannter Weise ebenfalls zwischen sich gegenüberliegenden Seitenwänden (22,23) gelagert und mit einen Einführschlitz für einen weiteren Gurt (21) sowie mit mindestens einem eine Vielzahl von Zähnen aufweisenden Klinkenrad (24) versehen ist, zu dessen Antrieb ein schwenkbarer Antriebshebel (27) dient, der eine mit den Zähnen des Klinkenrades (24) in Eingriff bringbare, federnde Antriebsklinke (28) zum Überführen des weiteren Gurtanschlusses (20) in unterschiedliche Winkelpositionen aufweist, in denen er durch mindestens eine federnde Sperrklinke (30,31) arretierbar ist.

## Claims

1. A device for connecting components - such as hooks (5), eyes, shackles, chain links or the like - and also for connecting tensioning and/or control devices of lifting and/or lashing arrangements with belts (14, 21), in which a belt connection (7) is rotatably mounted between side walls (1,2), which lie opposite each other, which belt connection is provided with an introduction slot (17) for the belt (14) and is connected so as to be secure with respect to rotation with at least one ratchet wheel (9), with which an elastically mounted ratchet (11) is associated, characterised in that the ratchet wheel (9) has only one tooth (10).

2. A device according to Claim 1 , characterised in that the belt connection (7) is provided with a return spring (13) to transfer the ratchet wheel (9) in its stop location.

3. A device according to one of Claims 1or 2, characterised in that the belt connection (7) has cross members delimiting the introduction slot (17).

4. A device according to Claim 3, characterised in that the cross members have a profile in the shape of a segment of a circle.

5. A device according to one of Claims 1 to 4, characterised in that the width (w) of the introduction slot (17) of the belt connection (7) is substantially equal to twice the thickness (s) of the belt (14) which is to be connected.

6. A device according to one of Claims 1 to 5,characterised in that parallel to the belt connection (7) and at a distance therefrom, at least one belt guide cross piece (15) is arranged, connecting with each other the side walls (1, 2) which carry the belt connection (7).

7. A device according to Claim 6, characterised in that the belt guide cross piece (15) is provided with a round guide surface for the belt (14).

8. A device according to one of Claims 1 to 7, characterised in that the side walls (1, 2) are connected with each other by a yoke (3).

9. A device according to Claim 8, characterised in that the yoke (3) has a bearing for a rotatable component (4).

10. A device according to one of Claims 1 to 7, characterised in that it is constructed as a belt ratchet with two belt connections (7, 20) lying opposite each other, in which the further belt connection (20), in a known manner, is likewise mounted between opposing side walls (22, 23) and is provided with an introduction slot for a further belt (21) and also with at least one ratchet wheel (24), having a plurality of teeth, the driving of which is provided by an orientable operating lever (27), which has an elastic operating pawl (28), able to be brought into engagement with the teeth of the ratchet wheel (24), to transfer the further belt connection (20) into various angular positions, in which it is able to be arrested by at least one elastic ratchet (30, 31).

## Revendications

1. Dispositif de jonction de pièces structurelles, telles que crochets (5), anneaux, manilles, maillons de chaîne ou analogues, ainsi que de dispositifs de mise sous tension et/ou de réglage pour agencements de levage et/ou d'amarrage a sangles (14, 21), dans lequel un raccord de sangle (7) est monté de façon à pouvoir tourner entre des joues latérales (1, 2) se faisant face, ce raccord de sangle (7) étant pourvu d'une fente (17) d'introduction de la sangle (14) et étant relié, de façon à en être solidaire en rotation, à au moins une roue à rochet (9) à laquelle est associé un cliquet d'arrêt (11) à ressort, caractérisé en ce que la roue à rochet (9) ne comporte qu'une seule dent (10).

2. Dispositif suivant la revendication 1, caractérisé en ce que le raccord de sangle (7) est pourvu d'un ressort de rappel (13) servant à faire passer la roue à rochet (9) dans sa position de verrouillage.

3. Dispositif suivant l'une des revendications 1 à 2, caractérisé en ce que le raccord de sangle (7) comporte des éléments transversaux délimitant la fente d'introduction (17).

4. Dispositif suivant la revendication 3, caractérisé en ce que les éléments transversaux ont un profil en forme de segment circulaire.

5. Dispositif suivant l'une des revendications 1 à 4, caractérisé en ce que la largeur intérieure (w) de la fente d'introduction (17) du raccord de sangle (7) est essentiellement égale à deux fois l'épaisseur (s) de la sangle (14) à raccorder.

6. Dispositif suivant l'une des revendications 1 à 5, caractérisé en ce que, parallèlement au raccord de sangle (7) et à distance de ce dernier, est disposée au moins une barre de guidage de sangle (15) qui relie entre elles las joues latérales (1, 2) portant le raccord de sangle (7).

7. Dispositif suivant la revendication 6, caractérisé en ce que la barre de guidage de sangle (15) comporte une surface arrondie de guidage de la sangle (14).

8. Dispositif suivant l'une des revendications 1 à 7, caractérisé en ce que les joues latérales (1, 2) sont réunies entre elles par un étrier (3).

9. Dispositif suivant la revendication 8, caractérisé en ce que l'étrier (3) comporte un palier pour une pièce structurelle (4) agencée de façon à pouvoir tourner.

10. Dispositif suivant l'une des revendications 1 à 7, caractérisé en ce qu'il est réalisé sous la forme d'un dispositif à cliquet pour sangle, comportant deux raccords de sangle (7, 20) disposés en regard l'un de l'autre, le second raccord de sangle (20) étant aussi monté, d'une manière connue, entre des joues latérales (22, 23), qui se font face, et comportant une fente d'introduction d'une autre sangle (21) et au moins une roue à rochet (24) qui comporte une pluralité de dents et à l'entraînement de laquelle sert un lever d'entraînement (27) agencé de façon à pouvoir basculer et comportant un cliquet d'entraînement (28) à ressort qui est agencé de façon à pouvoir être mis en prise avec les dents de la roue à rochet (24) et sert à faire passer le second raccord de sangle (20) dans différentes positions angulaires dans lesquelles il peut être immobilisé au moyen d'au moins un cliquet de verrouillage (30, 31) à ressort.
